# FASCICULE DE BREVET EUROPEEN

(11) **EP 1 074 406 B1**
(45) Date de publication et mention de la délivrance du brevet: **15.03.2006**
(21) Numéro de dépôt: 99401960.2
(22) Date de dépôt: 02.08.1999
(51) Int. Cl.: B60G 3/20

(54) **Dispositif de suspension perfectionné pour roue avant de véhicule automobile**
Verbesserte Vorrichtung für eine Vorderradaufhängung eines Kraftfahrzeuges
Improved device for a front wheel suspension of a motor vehicle

(43) Date de publication de la demande: 07.02.2001
(73) Titulaire: AUTOMOBILES PEUGEOT, 75116 Paris (FR); AUTOMOBILES CITROEN, 92200 Neuilly-sur-Seine (FR)
(72) Inventeur: Galtier, Lucien, 91390 Morsang Sur Orge (FR)
(74) Mandataire: Gendraud, Pierre

(56) Documents cités:
- WO-A-95/12500
- DE-A- 4 012 418
- FR-A- 2 707 926
- FR-A- 2 721 258
- FR-A- 2 723 887
- US-A- 5 249 817

## Description

La présente invention concerne un dispositif de suspension perfectionné pour roue avant de véhicule automobile.

Elle se rapporte, plus particulièrement, à un dispositif de suspension de roues avant directrices de véhicules automobiles du type à double triangle comprenant un pivot portant la roue, relié à une jambe sensiblement verticale par des moyens d'articulation autour d'un axe de pivotement de la roue, deux bras sensiblement horizontaux superposés, en forme de triangle, articulés par leurs extrémités sur la jambe et sur le corps du véhicule, la jambe et les bras délimitant un quadrilatère de suspension déformable sensiblement vertical relié au corps du véhicule par un organe de suspension déformable élastiquement.

Ce type de suspension, qui est décrit dans les documents FR 2723887, FR 2721258, et FR 2707926, permet d'obtenir un bon comportement dynamique du véhicule, du fait qu'il permet de réduire le déport, mesuré suivant l'axe de la roue, de l'axe d'articulation du pivot par rapport au plan vertical médian de la roue.

L'inconvénient majeur de ce type de train réside dans le fait que l'encombrement dû à l'articulation reliant le pivot au triangle inférieur, comportant généralement une rotule, ainsi que l'encombrement dû au disque de frein et à l'étrier qui enjambe ce disque, limitent les possibilités de réduire le déport entre l'axe d'articulation du pivot et le plan vertical médian de la roue.

De plus, il est relativement difficile de loger dans un espace très restreint délimité par le passage de roue, les divers éléments constituant ce double triangle.

On connaît à cet effet, une demande de brevet français n°93 07 918 déposée le 29 juin 1993 par les présentes demanderesses, relative à une suspension pour roue avant directrice du type à double triangle qui à pour but de remédier aux inconvénients précités.

La solution décrite dans cette demande s'avère satisfaisante mais du fait de la proximité des rotules qui déterminent l'axe de pivotement de la roue avec le disque de frein, le déport à l'axe de roue reste encore important.

Ainsi, la présente invention a pour but de proposer un perfectionnement au dispositif décrit ci-dessus qui permet de réduire le déport. De plus, la présente invention a pour but, également, de proposer un dispositif de suspension qui présente comme caractéristique principale un bon agrément de conduite.

A cet effet, la présente invention à pour objet un dispositif de suspension de roues avant directrices de véhicules automobiles du type à double triangle comprenant un pivot portant la roue, relié à une jambe sensiblement verticale par des moyens d'articulation, deux bras sensiblement horizontaux superposés, en forme de triangle, respectivement désigné bras supérieur et bras inférieur, le bras supérieur étant articulé par ses extrémités sur la jambe et sur le corps du véhicule, et le bras inférieur étant articulé par ses extrémités sur le pivot et le corps du véhicule, l'ensemble constitué par le pivot, la jambe et les bras délimitant un quadrilatère de suspension déformable sensiblement vertical qui est relié au corps du véhicule par un organe de suspension déformable élastiquement, caractérisé en ce que l'un des moyens d'articulation de la jambe sur le pivot défini avec l'extrémité jointive du bras inférieur en forme de triangle un axe de pivotement de la roue.

Suivant quelques dispositions intéressantes de l'invention:
- la jambe forme un arc de cercle délimitant deux branches superposées s'étendant .vers l'extérieur du quadrilatère de suspension, le bras supérieur étant articulé sur l'une des branches de la jambe dite branche supérieure, l'autre branche de la jambe dite branche inférieure étant articulée sur le pivot par l'intermédiaire d'une rotule,
- le pivot est pourvu d'une extension s'étendant sensiblement verticalement dont l'extrémité libre est articulée sur la branche supérieure de la jambe au moyen d'une rotule portée par l'extension, constituant ainsi l'articulation supérieure du pivot,
- la branche inférieure de la jambe est articulée sur le pivot au moyen d'une rotule située sur l'axe de pivotement de la roue,
- la rotule de la branche inférieure de la jambe est située sur le pivot de manière légèrement déportée vers l'arrière et vers le centre du véhicule par rapport à l'axe de pivotement de la roue,
- le bras supérieur est relié à la jambe au moyen d'une articulation rotulante,
- l'articulation rotulante est déportée dans un plan sensiblement vertical d'une valeur angulaire par rapport à l'articulation supérieure du pivot sur la jambe,
- une biellette contenue dans un plan parallèle au plan de roue est reliée élastiquement d'une part au corps de caisse et d'autre part à la jambe de manière à assurer le maintien et le guidage en rotation de la jambe autour d'un axe passant par l'articulation rotulante et l'articulation de la branche inférieure de la jambe sur le pivot,
- le bras inférieur comporte deux tiges qui sont disposées l'une par rapport à l'autre dans un plan horizontal de manière à ce qu'elle convergent vers un point fictif par lequel passe l'axe de pivotement de la roue,
- l'une des extrémités libres de chacune des tiges est reliée au corps du véhicule par des articulations d'axes sensiblement horizontaux tandis que l'autre des extrémités de chacune des tiges est reliée au pivot au moyen d'une rotule fixée sur le pivot,
- l'organe de suspension, disposé verticalement, est articulé au moyen d'une articulation élastique dans sa partie basse à l'une des extrémités de la branche inférieure de la jambe et reliée dans sa partie haute au corps du véhicule.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en perspective, partielle, d'un dispositif de suspension selon un premier mode de réalisation de l'invention ;
- la figure 2 est une vue similaire à la figure 1 d'un dispositif de suspension selon un second mode de réalisation ;
- la figure 3 est une vue similaire à la figure 1 d'un dispositif de suspension selon un troisième mode de réalisation ; et
- la figure 4 est une vue similaire à la figure 1 d'un dispositif de suspension selon un quatrième mode de réalisation.

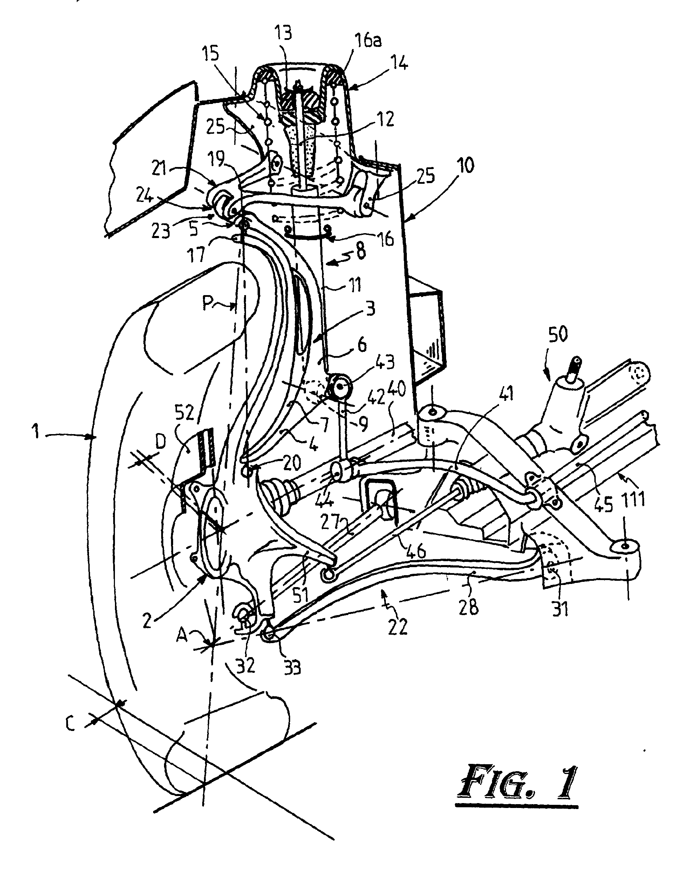

On a représenté à la figure 1, un dispositif de suspension pour une roue 1 avant motrice et directrice d'un véhicule automobile, selon un premier mode de réalisation de l'invention.

La roue 1 est fixée par des moyens connus, non représentés sur les figures, sur un pivot 2 articulé sur une jambe 3 et relié à la direction du véhicule.

La jambe 3 s'étend sensiblement verticalement et a une forme générale en arc de cercle de manière à délimiter deux branches superposées respectivement désignées dans la suite de la description branche inférieure 4 et branche supérieure 5.

L'extrémité de la branche inférieure 4 s'étend à l'intérieur de la roue 1 tandis que l'extrémité de la seconde branche 5 s'étend à l'extérieur de la roue 1 sensiblement au dessus de cette dernière, comme visible plus clairement sur la figure 1.

La jambe 3 comporte deux ailes 6 parallèles reliées entre elles par une âme 7 délimitant ainsi un espace à l'intérieur duquel est logé sensiblement verticalement un organe de suspension 8 déformable élastiquement de manière à réduire l'encombrement de cet organe.

Cet organe de suspension 8 est articulé, au moyen d'une articulation élastique 9 dans sa partie basse à l'une des extrémités de la branche inférieure 4 et relié dans sa partie haute, en considérant la figure 1, au corps 10 du véhicule.

L'organe de suspension 8 est constitué, dans le mode de réalisation représenté, d'un amortisseur muni d'un corps 11 et d'une tige télescopique 12. L'extrémité libre de la tige 12 est reliée par une articulation élastique 13 à un étrier 14 fixé, par exemple par boulonnage, sur le corps 10 du véhicule. Un ressort à boudin 15, coaxial à l'amortisseur, s'étend entre deux sièges 16, 16a dont l'un est solidaire du corps de l'amortisseur et l'autre de l'étrier 14.

Dans une variante de réalisation, l'organe de suspension 8 est du type hydropneumatique dans lequel le vérin de suspension est disposé en lieu et place de l'amortisseur métallique.

Selon la présente invention, le pivot 2 est pourvu d'une extension 17 vers le haut qui a une forme générale en arc de cercle de manière à contourner la roue 1. L'extrémité libre de cette extension 17 est articulée sur la branche supérieure de la jambe au moyen d'une rotule 19 portée par l'extension 17 formant ainsi l'articulation supérieure du pivot 2.

La branche inférieure 4 de la jambe 3 est articulée sur le pivot au moyen d'une rotule 20 portée par cette dernière de sorte que le pivot 2 est dit "porteur" car ce dernier reçoit la charge verticale par cette rotule 20.

La jambe 3 et le pivot 2 sont reliés au corps du véhicule par l'intermédiaire de deux bras 21, 22, désignés par la suite bras supérieur 21 et bras inférieur 22, sensiblement horizontaux superposés articulés par leurs extrémités respectivement sur la jambe 3 et le corps 10 du véhicule, et sur le pivot 2 et le corps 10 du véhicule par l'intermédiaire d'un berceau 111.

Le bras supérieur 21 comporte deux branches délimitant un triangle, l'extrémité de jonction 23 de ces branches étant reliée à la branche supérieure 5 de la jambe 3 au moyen d'une articulation 24 ou d'une rotule, et les extrémités libres des branches étant reliées à deux flasques 25 correspondants de l'étrier 14 par des articulations élastiques.

On notera que l'articulation supérieure 19 du pivot 2 sur la branche supérieure 5 de la jambe 3 peut être disposée sur l'axe des articulations du bras supérieur 21 avec la branche supérieure 5 de manière à obtenir un encombrement réduit.

Le bras inférieur 22 comporte deux tiges 27, 28 qui sont disposées l'une par rapport à l'autre dans un plan horizontal de manière à ce qu'elles convergent vers un point fictif A.

Ce point de convergence A défini avec le point d'articulation supérieure 19 du pivot 2 une droite fictive correspondant à l'axe de pivotement P de la roue et par voie de conséquence du pivot 2.

On notera, avantageusement, qu'une architecture du pivot et des bras permet d'incliner l'axe de pivotement P de la roue de sorte que le déport D de l'axe de pivotement au centre 30 de la roue 1 soit très faible et qu'on obtienne un déport C au sol négatif, comme visible sur la figure 1, permettant ainsi une meilleure progressivité de direction.

La rotule 20 d'articulation de la branche inférieure 4 de la jambe 3 sur le pivot 2 est située, selon un premier mode de réalisation, sur le pivot 2 de telle sorte qu'elle soit légèrement déportée vers l'arrière et vers le centre du véhicule par rapport à l'axe de pivot fictif P de la roue 1. Ainsi lors du braquage de la roue 1, la rotule 20 décrit un arc de cercle autour de l'axe de pivotement P tout en déplaçant la base de la jambe 3 avec l'organe de suspension, ce qui permet à la roue un angle de braquage plus important pour obtenir un plus faible rayon de braquage du véhicule.

La valeur angulaire de l'arc de cercle décrit par la rotule correspond sensiblement à l'angle de braquage de la roue 1.

L'une des extrémités libres de chacune des tiges 27, 28 est reliée au corps 10 du véhicule par des articulations 31 munies de manchons élastiques d'articulation d'axes sensiblement horizontaux tandis que l'autre des extrémités de chacune des tiges est reliée au pivot 2 au moyen d'une rotule respectivement 32, 33 fixée sur le pivot 2.

De manière classique, un arbre de transmission 40 est relié de façon connue, à une fusée d'entraînement en rotation de la roue 1 portée par le pivot 2.

On a également représenté sur la figure 1 une tringlerie anti-devers 41 comportant une biellette 42 munie d'une première extrémité 43 reliée à la jambe 3 par une articulation montée au voisinage de l'articulation 9 du corps 11 de l'amortisseur, et une seconde extrémité 44 articulée avec une barre de torsion 45 disposée transversalement au véhicule.

Le pivot 2 est relié au moyen d'une biellette 46 à un mécanisme de direction 50 du type connu, par exemple à crémaillère.

Cette biellette 46 est articulée sur une partie formant levier du pivot 51 agencée de manière à obtenir des variations satisfaisantes de l'ouverture ou du pincement de la roue 1 lors des déplacements de cette dernière par rapport au corps du véhicule.

De façon classique, le mécanisme de direction 50 est commandé par un volant manoeuvré par le conducteur de manière à faire tourner le pivot 2 autour de l'axe fictif P par l'intermédiaire de la biellette 46.

On notera que la biellette 46 du mécanisme de direction 50 est sensiblement proche du plan horizontal contenant les axes d'articulation élastique 31 des tiges 27, 28 du bras inférieur 22, ce qui permet à la biellette 46 de direction d'être d'une longueur standard et sensiblement droite.

L'invention présente de nombreux avantages, en particulier les efforts de suspension verticaux agissent axialement sur l'amortisseur de sorte que celui-ci n'est pas sollicité par des efforts transversaux ni longitudinaux réduisant ainsi les frottements de coulisse et optimisant donc le confort vertical.

De plus, le bras inférieur 22 permet d'avoir un centre instantané fictif A de pivotement inférieur du pivot 2, permettant lors de la conception de situer ce dernier dans l'espace au-dessous de l'axe de roue, ou on le désire, sans être gêné par le volume du disque de frein 52, de sorte que celui-ci peut se situer en pleine matière dudit disque.

Un tel dispositif permet donc d'avoir un déport D au centre de roue de l'axe de pivotement P très faible et une inclinaison d'un angle faible de cet axe de pivotement P entraînant ainsi un agrément de conduite optimum.

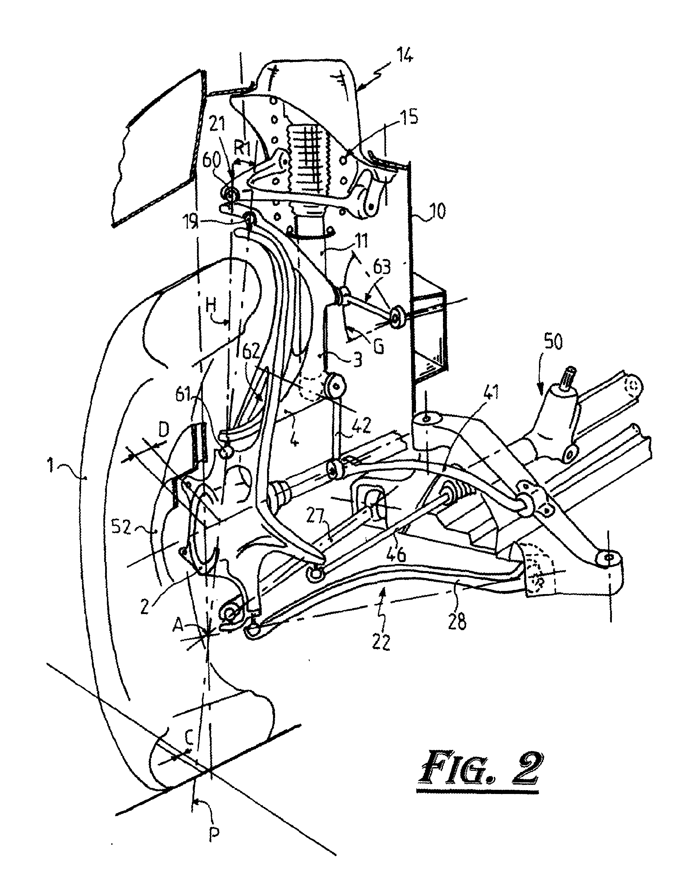

On a représenté à la figure 2, un second mode de réalisation d'un dispositif de suspension d'une roue 1 directrice, pour lequel les pièces identiques au premier mode de réalisation porte les mêmes références numériques.

A la différence du premier mode de réalisation, le bras supérieur 21 est relié à la jambe 3 au moyen d'une articulation rotulante 60.

Cette articulation rotulante 60 est avantageusement déportée dans un plan sensiblement vertical d'une valeur angulaire R1 par rapport à l'articulation supérieure 19 du pivot 2 sur la jambe 3.

La branche inférieure 4 de la jambe 3 est articulé sur le pivot 2 par une rotule 61 qui est située sensiblement sur l'axe fictif de pivotement P de la roue 1.

On notera que dans un souci de réalisation, l'extension du pivot 2 est munie d'une ouverture 62 au travers duquel passe la branche inférieure 4.

Afin d'assurer le maintien et le guidage en rotation de la jambe 3 autour de l'axe H passant par les articulations rotulantes 60 et 61, une biellette 63 contenue dans un plan parallèle au plan de roue est reliée élastiquement ou par rotules d'une part au corps 10 de caisse et d'autre part à la jambe 3.

Cette biellette 63 décrit lors des débattements verticaux du pivot 2 un arc de cercle G, comme visible à la figure 2, ce qui engendre un débattement angulaire de la jambe 3 autour de l'axe H.

On notera qu'en position verticale de pompage véhicule, la trajectoire de l'articulation supérieure 19 du pivot est pilotée par la position dans l'espace relative entre les articulations 19 et 60 et leur distance R1 et d'autre part, par la position dans l'espace de l'articulation de la biellette 63 sur la jambe 3 et en tenant compte de longueur de cette biellette 63.

Tous ces paramètres agissant lors des mouvements verticaux de pompage permettent de piloter la trajectoire de l'axe de pivotement P, donc l'épure de carrossage, l'épure de chasse et plus particulièrement l'épure de pince.

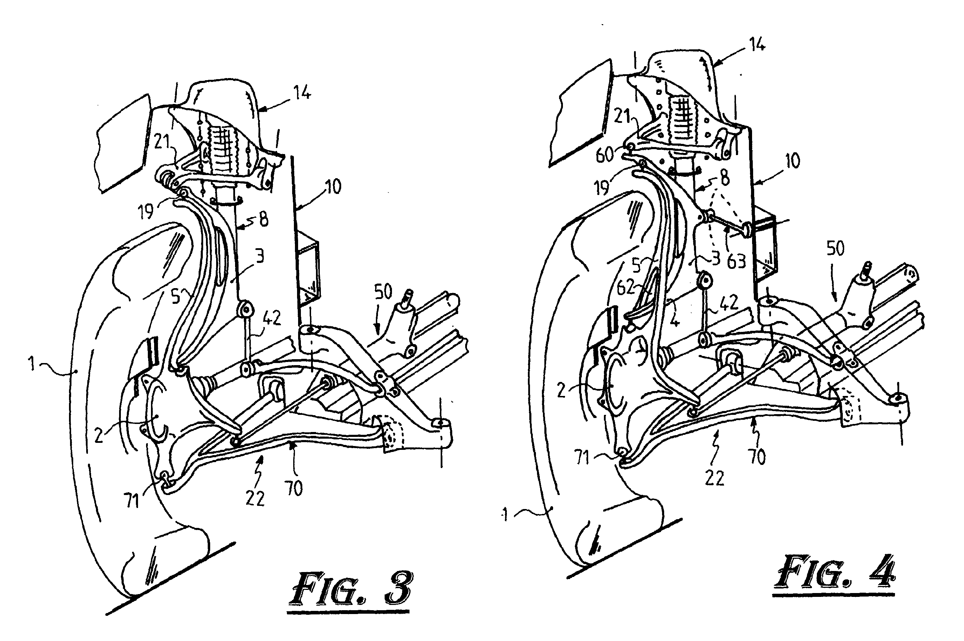

On a représenté aux figures 3 et 4, des variantes de réalisation du bras inférieur 22 respectivement selon les deux modes de réalisation décrit ci-dessus.

Dans ces variantes, les tiges 27, 28 constituant le bras inférieur 22 sont remplacées par deux branches délimitant un triangle 70. L'extrémité de jonction de ces branches est reliée au pivot 2 au moyen d'une rotule 71.

Selon encore une variante de réalisation, la roue avant 1 peut ne pas être motrice. Dans ce cas elle n'est pas reliée à l'arbre de transmission.

Le montage du dispositif de suspension selon l'invention est avantageusement très simple et similaire à celui d'un dispositif de suspension du type Mac Pherson.

Bien que l'invention ait été décrite en liaison avec des modes de réalisation particuliers, elle comprend tous les équivalents techniques des moyens décrits.

## Revendications

1. Dispositif de suspension de roues avant directrices de véhicules automobiles du type à double triangle comprenant un pivot (2) portant la roue (1), relié à une jambe (3) sensiblement verticale par des moyens d'articulation (20, 19; 61, 19), deux bras (21, 22) sensiblement horizontaux superposés, en forme de triangle, respectivement désigné bras supérieur (21) et bras inférieur (22), le bras supérieur (21) étant articulé par ses extrémités sur la jambe (3) et sur le corps (10) du véhicule, et le bras inférieur (22) étant articulé par ses extrémités sur le pivot (2) et le corps (10) du véhicule, l'ensemble constitué par le pivot (2), la jambe (3) et les bras (21, 22) délimitant un quadrilatère de suspension déformable sensiblement vertical qui est relié au corps (10) du véhicule par un organe de suspension (8) déformable élastiquement, **caractérisé en ce que** l'un des moyens d'articulation (19) de la jambe (3) sur le pivot (2) défini avec l'extrémité jointive (A, 71) du bras inférieur (22) en forme de triangle un axe de pivotement (P) de la roue (1).

2. Dispositif selon la revendication 1, **caractérisé en ce que** la jambe (3) forme un arc de cercle délimitant deux branches superposées (4, 5) s'étendant vers l'extérieur du quadrilatère de suspension, le bras supérieur (21) étant articulé sur l'une des branches de la jambe dite branche supérieure (5), l'autre branche (4) de la jambe dite branche inférieure (4) étant articulée sur le pivot (2) par l'intermédiaire d'une rotule (20; 61).

3. Dispositif selon la revendication 2, **caractérisé en ce que** le pivot (2) est pourvu d'une extension (17) s'étendant sensiblement verticalement dont l'extrémité libre est articulée sur la branche supérieure (5) de la jambe (3) au moyen d'une rotule (19) portée par l'extension (17), constituant ainsi l'articulation supérieure (19) du pivot (2).

4. Dispositif selon l'une quelconque des revendications 2 à 3, **caractérisé en ce que** la branche inférieure (4) de la jambe (3) est articulée sur le pivot au moyen d'une rotule (61) située sur l'axe de pivotement (P) de la roue (1).

5. Dispositif selon l'une quelconque des revendications 2 à 3, **caractérisé en ce que** la rotule (20) de la branche inférieure (4) de la jambe (3) est située sur le pivot (2) de manière légèrement déportée vers l'arrière et vers le centre du véhicule par rapport à l'axe de pivotement (P) de la roue (1).

6. Dispositif selon l'une quelconque des revendications 1 à 4, **caractérisé en ce que** le bras supérieur (21) est relié à la jambe (3) au moyen d'une articulation rotulante (60).

7. Dispositif selon la revendication 6, **caractérisé en ce que** l'articulation rotulante (60) est déportée dans un plan sensiblement vertical d'une valeur angulaire (R1) par rapport à l'articulation supérieure (19) du pivot (2) sur la jambe (3).

8. Dispositif selon la revendication 7, **caractérisé en ce qu'**une biellette (63) contenue dans un plan parallèle au plan de roue est reliée élastiquement d'une part au corps (10) de caisse et d'autre part à la jambe (3) de manière à assurer le maintien et le guidage en rotation de la jambe (3) autour d'un axe (H) passant par l'articulation rotulante (60) et l'articulation (61) de la branche inférieure (4) de la jambe sur le pivot (2).

9. Dispositif selon l'une quelconque des revendications précédentes, **caractérisé en ce que** le bras inférieur (22) comporte deux tiges (27, 28) qui sont disposées l'une par rapport à l'autre dans un plan horizontal de manière à ce qu'elle convergent vers un point fictif (A) par lequel passe l'axe de pivotement (P) de la roue (1).

10. Dispositif selon la revendication 9, **caractérisé en ce que** l'une des extrémités libres de chacune des tiges (27, 28) est reliée au corps (10) du véhicule par des articulations d'axes sensiblement horizontaux tandis que l'autre des extrémités de chacune des tiges (27, 28) est reliée au pivot (2) au moyen d'une rotule (32, 33) fixée sur le pivot (2).

11. Dispositif selon l'une quelconque des revendications précédentes, **caractérisé en ce que** l'organe de suspension (8), disposé verticalement, est articulé au moyen d'une articulation élastique (9) dans sa partie basse à l'une des extrémités de la branche inférieure (4) de la jambe (3) et reliée dans sa partie haute au corps (10) du véhicule.

## Patentansprüche

1. Vorrichtung zur Aufhängung gelenkter Kraftfahrzeug-Vorderräder mit Doppel-Dreieckslenker, die einen Zapfen (2), der das Rad (1) trägt und mit einem im Wesentlichen vertikalen Bein (3) über Gelenkmittel (20, 19; 61, 19) verbunden ist, und zwei übereinander liegende, im Wesentlichen horizontale Arme (21, 22) in Dreiecksform aufweist, die als oberer Arm (21) beziehungsweise unterer Arm (22) bezeichnet werden, wobei der obere Arm (21) an seinen Enden am Bein (3) und am Gehäuse (10) des Fahrzeugs und der untere Arm (22) an seinen Enden am Zapfen (2) und am Gehäuse (10) des Fahrzeugs angelenkt sind und wobei die Einheit aus Zapfen (2), Bein (3) und Armen (21, 22) ein im Wesentlichen vertikales, verformbares Aufhängungsviereck festlegt, das mit dem Gehäuse (10) des Fahrzeugs über ein elastisch verformbares Aufhängungsorgan (8) verbunden ist, **dadurch gekennzeichnet, dass** eines der Mittel (19) zum Anlenken des Beins (3) am Zapfen (2) mit dem verbindenden Ende (A, 71) des unteren Arms in Dreiecksform eine Schwenkachse (P) des Rads (1) festlegt.

2. Vorrichtung nach Anspruch 1, **dadurch gekennzeichnet, dass** das Bein (3) einen Kreisbogen bildet, der zwei übereinander liegende Zweige (4, 5) festlegt, die sich aus dem Aufhängungsvierecks hinaus erstrecken, wobei der obere Arm (21) an einem der Zweige des Beins, dem so genannten oberen Zweig (5), und der andere Zweig (4) des Beins, der so genannte untere Zweig (4), am Zapfen (2) über ein Kugelgelenk (20; 61) angelenkt sind.

3. Vorrichtung nach Anspruch 2, **dadurch gekennzeichnet, dass** der Zapfen (2) mit einer im Wesentlichen vertikalen Erweiterung (17) versehen ist, deren freies Ende am oberen Zweig (5) des Beins (3) mittels eines von der Erweiterung (17) getragenen Kugelgelenks (19) angelenkt ist und damit das obere Gelenk (19) des Zapfens (2) bildet.

4. Vorrichtung nach einem der Ansprüche 2 bis 3, **dadurch gekennzeichnet, dass** der untere Zweig (4) des Beins mittels eines an der Schwenkachse (P) des Rads (1) angeordneten Kugelgelenks (61) am Zapfen angelenkt ist.

5. Vorrichtung nach einem der Ansprüche 2 bis 3, **dadurch gekennzeichnet, dass** das Kugelgelenk (20) des unteren Zweigs (4) des Beins (3) gegenüber der Schwenkachse (P) des Rads (1) leicht nach hinten und zur Mitte des Fahrzeugs versetzt am Zapfen (2) angeordnet ist.

6. Vorrichtung nach einem der Ansprüche 1 bis 4, **dadurch gekennzeichnet, dass** der obere Arm (21) mittels eines Gelenklagers (60) mit dem Bein (3) verbunden ist.

7. Vorrichtung nach Anspruch 6, **dadurch gekennzeichnet, dass** das Gelenklager (60) in einer im Wesentlichen vertikalen Ebene um einen Winkelwert (R1) gegenüber dem oberen Gelenk (19) des Zapfens (2) am Bein (3) versetzt ist.

8. Vorrichtung nach Anspruch 7, **dadurch gekennzeichnet, dass** ein Schwingarm (63), der in einer Ebene enthalten ist, die parallel zur Radebene verläuft, elastisch zum einen mit dem Gehäuse (10) des Aufbaus und zum anderen mit dem Bein (3) verbunden ist, sodass der Halt und die Führung des Beins (3) in Drehung um eine Achse (H), die durch das Gelenklager (60) und das Gelenk (61) des unteren Zweigs (4) des Beins am Zapfen verläuft, sichergestellt sind.

9. Vorrichtung nach einem der vorhergehenden Ansprüche, **dadurch gekennzeichnet, dass** der untere Arm (22) zwei Stangen (27, 28) aufweist, die in einer horizontalen Ebene derart zueinander angeordnet sind, dass sie zu einem fiktiven Punkt (A) konvergieren, durch den die Schwenkachse (P) des Rads (1) verläuft.

10. Vorrichtung nach Anspruch 9, **dadurch gekennzeichnet, dass** eines der freien Enden jeder Stange (27, 28) mit dem Gehäuse (10) des Fahrzeugs über Gelenke von im Wesentlichen horizontalen Achsen verbunden ist, während das andere Ende jeder Stange (27, 28) mit dem Zapfen (2) über ein am Zapfen (2) befestigtes Kugelgelenk (32, 33) verbunden ist.

11. Vorrichtung nach einem der vorhergehenden Ansprüche, **dadurch gekennzeichnet, dass** das vertikal angeordnete Aufhängungsorgan (8) mittels eines elastischen Gelenks (9) in seinem unteren Abschnitt an einem der Enden des unteren Zweigs (4) des Beins (3) und in seinem oberen Abschnitt am Gehäuse (10) des Fahrzeugs angelenkt ist.

## Claims

1. Suspension device for front steering wheels of motor vehicles of the double-triangle type comprising a pivot (2) carrying the wheel (1), connected to a substantially vertical leg (3) by articulation means (20, 19; 61, 19), two substantially horizontal superimposed arms (21, 22), in the shape of a triangle, denoted the upper arm (21) and lower arm (22) respectively, the upper arm (21) being articulated by its ends to the leg (3) and to the body (10) of the vehicle, and the lower arm (22) being articulated by its ends to the pivot (2) and the body (10) of the vehicle, the assembly constituted by the pivot (2), the leg (3) and the arms (21, 22) delimiting a substantially vertical, deformable suspension quadrilateral that is connected to the body (10) of the vehicle by an elastically deformable suspension member (8), **characterised in that** one of the means (19) for articulating the leg (3) to the pivot (2) defines, together with the contiguous end (A, 71) of the triangular lower arm (22), an axis of pivoting (P) for the wheel (1).

2. Device according to Claim 1, **characterised in that** the leg (3) forms an arc of a circle delimiting two superimposed branches (4, 5) extending towards the outside of the suspension quadrilateral, the upper arm (21) being articulated to one of the branches of the leg known as the upper branch (5), the other branch (4) of the leg, known as the lower branch (4), being articulated to the pivot (2) via a ball joint (20; 61).

3. Device according to Claim 2, **characterised in that** the pivot (2) is provided with an extension (17) extending substantially vertically, the free end of which is articulated to the upper branch (5) of the leg (3) by means of a ball joint (19) carried by the extension (17), thus constituting the upper articulation (19) of the pivot (2).

4. Device according to any one of Claims 2 to 3, **characterised in that** the lower branch (4) of the leg (3) is articulated to the pivot by means of a ball joint (61) located on the axis of pivoting (P) of the wheel (1).

5. Device according to any one of Claims 2 to 3, **characterised in that** the ball joint (20) of the lower branch (4) of the leg (3) is located on the pivot (2), slightly offset backwards and towards the centre of the vehicle relative to the axis of pivoting (P) of the wheel (1).

6. Device according to any one of Claims 1 to 4, **characterised in that** the upper arm (21) is connected to the leg (3) by means of a swivelling articulation (60).

7. Device according to Claim 6, **characterised in that** the swivelling articulation (60) is offset in a substantially vertical plane by an angular value (R1) relative to the upper articulation (19) of the pivot (2) on the leg (3).

8. Device according to Claim 7, **characterised in that** a rod (63) contained in a plane parallel to the plane of the wheel is connected elastically on the one hand to the shell of the body (10) and on the other hand to the leg (3) so as to ensure the holding and the guiding in rotation of the leg (3) about an axis (H) passing through the swivelling articulation (60) and the articulation (61) of the lower branch (4) of the leg on the pivot (2).

9. Device according to any one of the preceding claims, **characterised in that** the lower arm (22) comprises two rods (27, 28) that are arranged relative to one another in a horizontal plane so that they converge towards a fictitious point (A) through which the axis of pivoting (P) of the wheel (1) passes.

10. Device according to Claim 9, **characterised in that** one of the free ends of each of the rods (27, 28) is connected to the body (10) of the vehicle by articulations with substantially horizontal axes while the other one of the ends of each of the rods (27, 28) is connected to the pivot (2) by means of a ball joint (32, 33) fixed to the pivot (2).

11. Device according to any one of the preceding claims, **characterised in that** the suspension member (8), arranged vertically, is articulated by means of a elastic articulation (9) in its lower part to one of the ends of the lower branch (4) of the leg (3) and is connected in its upper part to the body (10) of the vehicle.
